# DEMANDE DE BREVET EUROPEEN

(11) **EP 0 597 530 A1**
(43) Date de publication de la demande: **18.05.1994**
(21) Numéro de dépôt: 93203090.1
(22) Date de dépôt: 04.11.1993
(51) Int. Cl.: G01F 1/708, G01F 1/712

(54) **Débitmètre volumique à mesure de temps de vol**

(30) Priorité: 10.11.1992 FR 9213651
(71) Demandeur: SCHLUMBERGER INDUSTRIES S.A., F-92120 Montrouge (FR)
(72) Inventeur: Guizot, Jean-Luc, F-94220 Charenton le Pont (FR); King, Bradley, F-92240 Malakoff (FR); Zarudiansky, Alain, F-78140 Vélizy (FR)
(74) Mandataire: Dupont, Henri

(57) **Abrégé**

Une enceinte aérodynamique (12, 112) est placée dans le flux, cette enceinte comportant une ouverture (14, 114) qui permet le remplissage de l'enceinte (12, 112) par le fluide en circulation et monté à fleur de la paroi de l'enceinte un générateur d'impulsions thermiques (16, 116) apte à émettre des impulsions thermiques simultanément vers l'intérieur et l'extérieur de l'enceinte; un premier capteur thermique (42, 142) dans le flux et un second capteur thermique (44, 144) dans l'enceinte mesurent des déphasages ou des temps de propagation des ondes thermiques respectivement dans le flux et à débit nul, ce qui permet de déduire la valeur du débit de fluide indépendamment des variations de température, pression et composition du fluide. Application au comptage de gaz.

## Description

La présente invention a pour objet un débitmètre volumique de fluide à mesure de temps de vol fournissant une indication de débit volumique compensée en température et pression, indépendamment des variations de composition du fluide dont le débit est mesuré. Elle s'applique notamment au comptage du gaz combustible à usage domestique.

D'une manière générale, pour déterminer un débit à partir d'une mesure de temps de vol d'impulsion thermiques, on place un émetteur d'impulsions de chaleur, par exemple une résistance chauffante, dans le fluide en circulation. A proximité de l'élément générateur d'onde de chaleur, on dispose un capteur de température, par exemple un thermocouple.

On mesure le temps de propagation de l'impulsion de chaleur entre l'émetteur et le capteur. Ce temps de vol dépend de la vitesse de circulation du fluide. La géométrie de la canalisation d'écoulement étant connue, le débit est déduit de la détermination de la vitesse du flux.

De manière usuelle, l'impulsion de chaleur est modulée. C'est alors un déphasage qui est mesuré entre l'onde de chaleur émise et celle détectée.

Dans cet exposé, l'expression "mesure de temps de vol" correspond indifféremment à une mesure de déphasage entre l'émission et la détection d'une impulsion de chaleur et à une mesure du temps de propagation de cette impulsion.

Ce principe de base n'est applicable que dans le cas idéal où la température, la pression, et la composition du fluide ne subissent pas de modification. En effet, si l'un de ces paramètres fluctue, le coefficient de diffusion du fluide varie, et à vitesse de circulation égale, le temps de propagation de l'impulsion varie. La mesure de débit est alors faussée.

Or, justement, ces paramètres varient de façon notable dans le cas des gaz de combustion usuellement délivrés par les distributeurs. Pour utiliser la mesure d'un temps vol (temps de propagation ou de déphasage) pour la détermination d'un débit dans ces conditions, il est donc nécessaire de corriger le temps de vol mesuré en tenant compte des variations de température, pression et composition du gaz. La connaissance de ces paramètres permet de déterminer le coefficient de diffusion du gaz et par conséquent de déduire la vitesse du fluide (et son débit) à partir de la mesure d'un temps de vol.

On comprend que ces mesures complémentaires compliquent énormément la détermination du débit et nécessitent des dispositifs difficiles à mettre en oeuvre, coûteux en argent et en énergie.

Le brevet américain 4713970 propose un dispositif de mesure de temps de propagation compensée en température et en pression en évitant leur mesure directe. Une résistance chauffante filaire est déposée sur un substrat isolant et un détecteur thermoélectrique est placé sur le substrat pour la détection des ondes thermiques émises par la résistance chauffante.

Le fil chauffant est disposé perpendiculairement à la direction du flux de fluide et le détecteur thermoélectrique est aligné avec le fil chauffant selon un axe parallèle au flux de fluide de manière à détecter les ondes thermiques se propageant parallèlement au flux de fluide.

Un dispositif de référence identique au précédent est utilisé pour compenser les effets de pression et de température. Pour cela, le dispositif de référence est utilisé pour effectuer une mesure à débit nul.

Dans une première série de réalisations, le dispositif de référence est placé perpendiculairement au dispositif de mesure. La propagation des ondes thermiques est alors sensiblement perpendiculaire à la direction du flux de fluide et donc pratiquement indépendante de sa vitesse. Mais ce dispositif est sensible aux perturbations de l'écoulement.

Dans une autre réalisation, le dispositif de référence est placé dans une région où le fluide est au repos.

Les dispositifs décrits dans le document US 4713970 bien qu'apportant des améliorations au dispositif de base présentent de nombreux inconvénients qui interdisent leur utilisation pour une application au comptage de gaz de combustion.

En effet, l'élément chauffant est placé sur la même paroi du substrat que le détecteur thermoélectrique. La mesure de propagation de l'impulsion de chaleur s'effectue localement aux abords de la paroi et est donc très sensible aux variations de viscosité dues à d'éventuelles modifications de la composition du fluide. Cette imprécision de mesure inhérente à la structure du capteur ne peut pas être compensée sans une détermination additionnelle de la composition du fluide.

De plus, aux abords de la paroi du substrat, la dynamique de vitesse du fluide est diminuée par rapport à la dynamique de vitesse considérée à quelques distances de cette paroi.

En effet, on sait que la vitesse d'écoulement est sensiblement nulle sur la paroi quel que soit le profil de vitesse par ailleurs. Il en résulte donc une sensibilité diminuée du système.

Par ailleurs, comme le substrat n'est pas un isolant partait, des fuites thermiques subsistent entre l'émetteur et le capteur thermique. Ces fuites thermiques entraînent un nécessaire accroissement de l'énergie à fournir pour le bon fonctionnement du système.

La compensation des variations de pression et de température est obtenue dans le brevet US 4713970 grâce au doublement de la structure de mesure. Ainsi les dispositifs décrits nécessitent au moins deux éléments chauffants.

On comprend donc que l'énergie nécessaire au fonctionnement de ces dispositifs à compensation est au moins égale au double de l'énergie nécessaire à un dispositif à élément chauffant unique. Or les considérations de consommation énergétique sont fondamentales lorsqu'on cherche à obtenir un débitmètre volumique appliqué au comptage de gaz combustible et non un dispositif pour la mesure de flux d'air dans les moteurs d'automobile à induction qui est l'application des dispositifs du documents US 4713970. Il faut, en effet, que l'alimentation par pile électrique soit suffisante pour assurer une durée de vie d'au moins dix ans sans qu'il soit nécessaire de changer la pile. Cette contrainte interdit l'adaptation d'un des dispositifs décrit dans le document US 4713970 à une application de comptage de gaz.

La présente invention pallie ces inconvénients. Elle permet la mesure d'un débit volumique en dépit des fluctuations de température, pression ou de composition de gaz.

De plus, le dispositif de l'invention ne nécessite qu'un élément chauffant unique ce qui permet de réduire sa consommation en énergie.

De manière plus précise, l'invention concerne un débitmètre volumique à mesure de temps de vol apte à être placé dans une canalisation dans laquelle circule un fluide. Ce débitmètre comprend:
une enceinte munie d'une ouverture apte à permettre des échanges de fluide entre l'intérieur et l'extérieur de l'enceinte, le fluide étant au repos dans l'enceinte,
un élément chauffant unique monté à fleur de paroi de l'enceinte et apte à émettre des impulsions de chaleur simultanément à l'intérieur et à l'extérieur de l'enceinte,
un premier capteur thermique placé hors de l'enceinte et sans contact avec l'enceinte à proximité de l'élément chauffant,
un second capteur thermique placé à l'intérieur de l'enceinte à proximité de l'élément chauffant,
des moyens de mesure d'un premier déphasage ou d'un premier temps de propagation entre l'émission des impulsions de chaleur et leur détection par le premier capteur thermique et d'un second déphasage ou d'un second temps de propagation entre l'émission des impulsions de chaleur et leur détection par le second capteur thermique,
et des moyens pour déduire un débit volumique compensé en température et pression et indépendant de la composition du fluide à partir des premier et second déphasages ou des premier et second temps de propagation.

Le dispositif conforme à l'invention effectue donc une première mesure dans le flux d'un temps de vol entre l'impulsion de chaleur émise et l'impulsion de chaleur détectée, et une seconde mesure de temps de vol dans le fluide au repos. La seconde mesure est utilisée pour la détermination du coefficient de diffusion du fluide et permet la correction de la première mesure sur toute la dynamique de mesure.

Il convient de noter qu'une mesure de temps de vol correspond aussi bien à une mesure de déphasage qu'à une mesure du temps de propagation de l'impulsion de chaleur.

Les capteurs thermiques sont décollés de la paroi sur laquelle est placé l'élément chauffant ce qui permet de diminuer les effets de viscosité. L'énergie nécessaire pour la création et la propagation de l'onde de chaleur est diminuée par rapport aux dispositifs de l'art antérieur. La consommation énergétique est aussi minimisée grâce à l'emploi d'un élément chauffant unique au lieu de deux dans l'art antérieur.

Avantageusement, l'élément chauffant est constitué par une résistance chauffante disposée sur une face d'une membrane apte à favoriser la conduction de la chaleur selon l'épaisseur de la membrane au détriment d'une conduction latérale de la chaleur.

Selon une réalisation particulière, l'élément chauffant comprend:
un support percé d'un orifice,
une couche isolante électriquement, solidaire du support et formant membrane au niveau de l'orifice,
une résistance chauffante constituée par un dépôt conducteur réalisé sur la membrane,
des pistes de contact connectées aux extrémités de la résistance chauffante.

Avantageusement, la couche est en nitrure de silicium.

La couche peut être également en polymère.

Selon une autre réalisation particulière, le débitmètre conforme à l'invention comporte au moins un capteur de température assujetti à l'élément chauffant.

Selon un mode de réalisation avantageux, au moins une partie de l'enceinte forme au moins un canal convergent avec une paroi de la canalisation et le premier capteur thermique est placé dans ce canal.

Ce canal convergent à l'intérieur duquel est effectuée la première mesure permet d'augmenter localement la vitesse du fluide et ainsi d'améliorer le rapport signal/bruit du dispositif.

Dans une réalisation particulière de l'invention, l'enceinte est un obstacle aérodynamique. Cet obstacle peut-être placé dans un plan médian de la canalisation.

L'obstacle aérodynamique peut présenter une partie amont sensiblement elliptique et une partie aval effilée, avec la partie amont qui forme au moins un canal convergent avec la paroi de la canalisation. On peut également envisager le cas où la partie aval forme au moins un canal convergent avec la paroi de la canalisation. Cet obstacle permet de minimiser l'effet de changement de viscosité du fluide.

De manière avantageuse, l'élément chauffant est placé sur la flanc de l'obstacle dans la partie en amont qui forme au moins un canal convergent avec la paroi de la canalisation.

Avantageusement, l'ouverture est placée dans la partie en aval de l'enceinte, ce qui évite de perturber la circulation du flux de fluide au niveau des éléments métrologiques (élément chauffant, capteurs de température) positionnés à l'intérieur de la cavité.

De manière préférée, le premier capteur de température est placé en amont de l'élément chauffant.

L'invention et ses avantages seront mieux compris à la lecture de la description qui suit donnée à titre illustratif et non limitatif en référence aux dessins annexés sur lesquels:
- la figure 1 représente schématiquement une vue en coupe de dessus d'un dispositif conforme à l'invention;
- la figure 2 représente schématiquement une vue de face d'un dispositif conforme à l'invention;
- les figures 3A et 3B représentent schématiquement une vue de dessus et une vue en coupe, respectivement, d'un élément chauffant;
- la figure 4 représente schématiquement une vue de dessus d'une variante de réalisation d'un dispositif conforme à l'invention.
- la figure 5 représente schématiquement une vue de dessus d'un autre exemple de réalisation d'un dispositif conforme à l'invention.

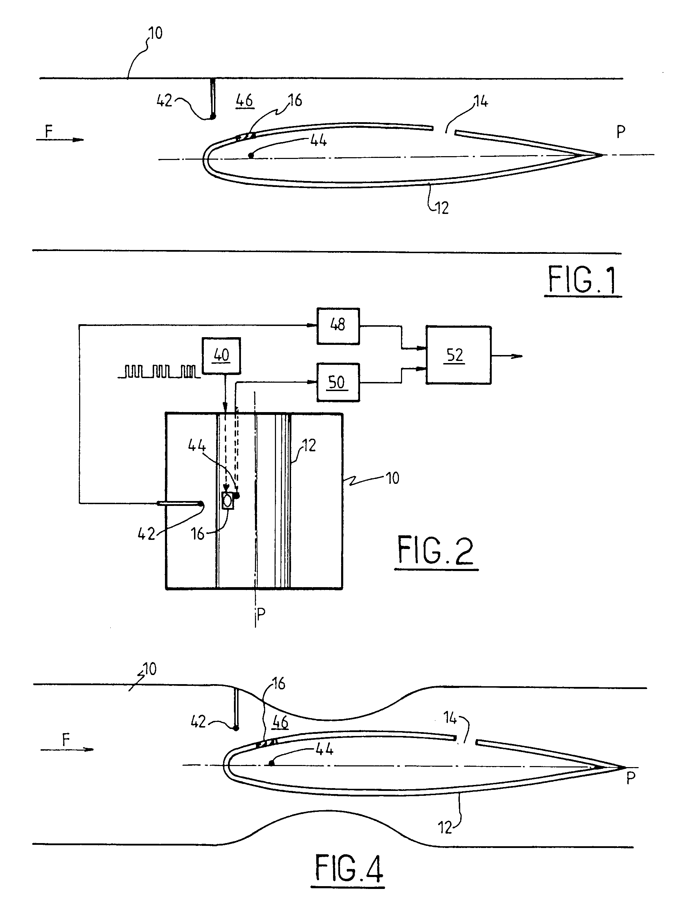

Un exemple de réalisation d'un dispositif conforme à l'invention est maintenant décrit en référence aux figures 1 et 2.

Le fluide F dont le débit volumique est à mesurer s'écoule dans une canalisation 10 par exemple de section carrée et est par exemple un gaz. La canalisation 10 possède un plan médian P.

Un obstacle 12 formant une enceinte est disposé dans la canalisation 10. Cet obstacle possède une forme aérodynamique. Dans l'exemple représenté, l'obstacle possède une partie en amont elliptique et une partie en aval effilée. Le grand axe de l'ellipse est positionné dans le plan médian P.

Comme on peut le voir sur la figure 2, l'obstacle 12 s'étend sur toute la hauteur de la canalisation. L'obstacle 12 peut-être réalisé en aluminium ou en matière plastique par exemple.

Sur la partie en aval de l'un de ses flancs, l'enceinte 12 présente une ouverture 14 permettant des échanges de fluide entre l'intérieur et l'extérieur de l'enceinte 12.

Sur la partie en amont de l'un de ses flancs, l'enceinte 12 supporte un élément chauffant 16 monté à fleur de la paroi extérieure de l'enceinte.

Cet élément chauffant 16 est monté dans une ouverture de l'enceinte pratiquée à cet effet. L'élément chauffant 16 est apte à émettre des ondes thermiques simultanément vers l'intérieur et l'extérieur de l'enceinte 12.

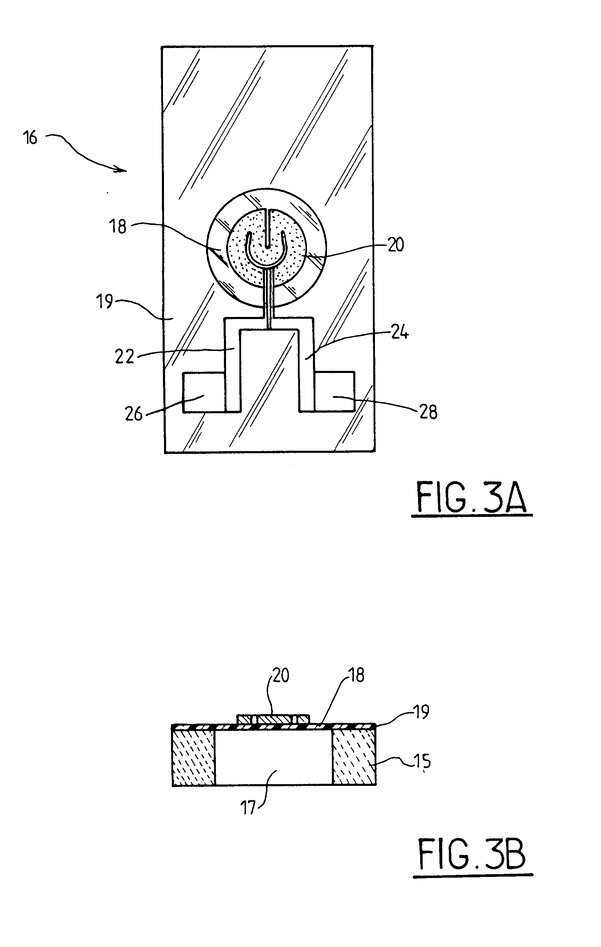

De manière avantageuse, l'élément chauffant 16 est constitué par une résistance chauffante réalisée sur une membrane. Un exemple d'un tel élément est représenté schématiquement vu de dessus sur la figure 3A et en coupe sur la figure 3B.

Comme on peut le voir sur les figures 3A et 3B, l'élément chauffant 16 comprend un support 15 percé d'un orifice 17. L'orifice peut présenter un diamètre de 3mm par exemple. Une couche 19 isolante électriquement, en nitrure de silicium par exemple, est déposée sur le support 15, de manière à former une membrane 18 tendue au dessus de l'orifice 17. Cette couche 19 peut également être réalisée dans un matériau polymère comme par exemple du "Kapton". L'épaisseur de la couche 19 est telle que la membrane est apte à minimiser les pertes de chaleur via le support. En d'autres termes l'épaisseur de la membrane est choisie de manière à favoriser une conduction transverse de la chaleur au détriment d'une conduction latérale. Cette épaisseur peut être de quelques microns.

Une résistance chauffante 20 est réalisée sur la membrane 18. Elle peut être obtenue par un dépôt métallique de NiCr, par exemple. La géométrie de la résistance 20 telle qu'elle est représentée sur la figure 3A permet une émission isotrope de l'impulsion thermique.

D'autres géométries peuvent être adoptées, par exemple une géométrie en serpentin.

Des pistes conductrices 22, 24, en or par exemple, sont connectées aux extrémités de la résistance 20 et sont terminées par des plots de contact 26, 28, en or par exemple permettant la connexion avec un circuit d'alimentation (non représenté sur les figures 3A et 3B).

De retour aux figures 1 et 2, on voit que la membrane 18 est montée à fleur de la paroi de l'enceinte 12. L'élément chauffant 16 ferme totalement l'ouverture dans laquelle il est fixé. Ceci permet d'éviter des perturbations dans l'écoulement du fluide lors de son passage au niveau de l'élément chauffant et d'obtenir à l'intérieur de l'enceinte un fluide quasiment au repos au niveau de l'élément chauffant. L'éloignement entre l'ouverture 14 placée en aval et l'élément chauffant 16 placé en amont sur le flanc de l'enceinte 12 permet aussi de s'assurer que le fluide est quasiment au repos dans l'enceinte au niveau de l'élément chauffant. La face de la membrane 18 supportant la résistance chauffante 20 est, par exemple, orientée vers l'extérieur de l'enceinte 12.

Lors de l'émission d'une onde thermique par l'élément chauffant 16, celle-ci présente un déphasage propre audit élément chauffant. Ce déphasage dépend de la composition chimique du fluide étant donné que l'élément chauffant 16 possède une faible masse thermique. Par conséquent, il est important de prévoir un capteur de température sur l'élément chauffant afin de mesurer ce déphasage et donc pour améliorer la qualité des débits mesurés. Ce capteur de température non représenté est par exemple une résistance électrique en forme de couronne déposée sur la membrane 18 de l'élément chauffant 16.

Sur la figure 2, on voit que l'élément chauffant 16 est relié à un générateur d'impulsions électriques modulées 40. Ces impulsions sont émises à une fréquence inférieure à la fréquence de coupure (pour l'émission d'impulsions de chaleur) de l'élément chauffant. Ces impulsions peuvent être émises à une fréquence comprise dans une gamme allant de 0,5 à 2 Hz, avoir une durée comprise dans une gamme allant de 0,1 à 2 secondes et être modulées à une fréquence comprise dans une gamme allant de 1 à 10 Hz.

Lorsqu'un courant électrique traverse la résistance chauffante, cette dernière émet une onde de chaleur. Vers l'extérieur de l'enceinte 12, l'onde de chaleur se propage dans le fluide en circulation. Vers l'intérieur de l'enceinte 12, l'onde thermique se propage à travers la membrane 18 puis dans le fluide au repos. Le temps caractéristique de propagation de l'onde thermique à travers la membrane est négligeable par rapport au temps caractéristique de propagation de l'onde de chaleur dans le fluide.

Les ondes de chaleur émises vers l'intérieur et l'extérieur de l'enceinte 12 sont détectées par des capteurs thermiques 42,44 situés à proximité de l'élément chauffant 16 hors de la paroi de l'enceinte et sans contact avec l'enceinte respectivement à l'extérieur et à l'intérieur de l'enceinte 12.

Ces capteurs thermiques 42, 44 peuvent être des thermocouples éloignés au plus de quelques millimètres de l'élément chauffant 16. Par exemple, ils sont éloignés de 1 millimètre.

Les thermocouples utilisés peuvent être en cuivre constantan.

Sur la figure 2, on peut voir que le thermocouple intérieur 44 est fixé à la paroi supérieure de la canalisation 10. Le thermocouple extérieur 42 est fixé à la paroi latérale de la canalisation 10 en regard du flanc de l'enceinte 12 supportant l'élément chauffant 16. Ce thermocouple 42 est disposé en amont de l'élément chauffant 16. On a constaté que cette disposition permet de satisfaire à la dynamique de mesure recherchée et à la détection des très faibles débits.

De plus, on peut voir sur la figure 1 que le thermocouple extérieur 42 est placé dans un canal convergent 46 formé par le flanc en amont de l'enceinte 12 et la paroi de la canalisation 10.

La forme convergente permet d'améliorer l'allure du profil de vitesse au niveau des éléments de mesure.

De cette manière, on augmente le rapport signal/bruit de la mesure.

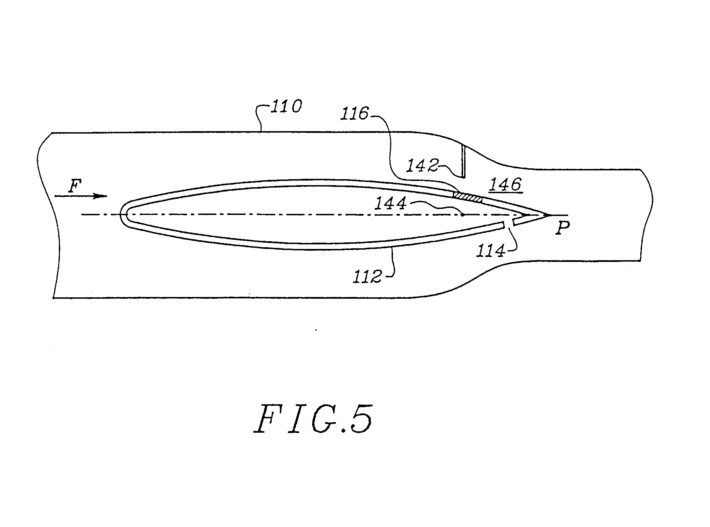

La figure 4 représente schématiquement une vue de dessus d'une variante de réalisation pour laquelle les parois latérales de la canalisation 10 forment un étranglement au niveau de l'enceinte 12. Ainsi, le canal 46 est d'autant plus convergent; l'augmentation de vitesse et l'amélioration du profil de vitesse sont donc plus importantes.

A nouveau en référence à la figure 2, on décrit maintenant les moyens mis en oeuvre pour effectuer les mesures de débit volumique.

Sous l'effet d'impulsions électriques modulées délivrées par le générateur 40, l'élément chauffant 16 engendre des ondes thermiques impulsionnelles modulées se propageant quasi simultanément dans le fluide en mouvement dans le canal 46 (figure 1) et à l'intérieur de l'enceinte 12. Ces ondes thermiques sont détectées par les capteurs thermiques 42, 44 à l'extérieur et à l'intérieur de l'enceinte 12.

Chaque capteur thermique 42, 44 est relié à un système à détection synchrone 48, 50 fonctionnant à la fréquence de modulation des impulsions de chaleur. Ces systèmes à détection synchrone délivrent chacun en sortie un signal correspondant à un déphasage, l'un (pour le système 48) correspondant au déphasage dû à la propagation de l'onde de chaleur dans le fluide en circulation, l'autre (pour le système 50) correspondant au déphasage dû à la propagation de l'onde de chaleur dans le fluide au repos à l'intérieur de l'enceinte 12. Ainsi, le premier déphasage est fonction des caractéristiques du fluide (par l'intermédiaire du coefficient de diffusion) et de sa vitesse alors que le second n'est fonction que des caractéristiques du fluide.

Ces détections synchrones sont reliées en sortie à un système de calcul 52 tel un processeur programmé de manière adéquate et délivrant en sortie un signal correspondant au débit du fluide calculé à partir des déphasages mesurés, une calibration préalable du dispositif étant réalisée.

La mesure du déphasage à débit nul permet de corriger la mesure de débit en fonction des variations de température, pression et composition du fluide. Cette mesure revient à évaluer le coefficient de diffusion du fluide en circulation.

L'homme du métier peut tout aussi bien mesurer directement les temps de propagation respectifs d'une impulsion de chaleur depuis l'élément chauffant 16 jusqu'aux premier et second capteurs thermiques 42, 44. Dans un tel cas, au lieu de générer plusieurs impulsions électriques à l'aide du générateur 40, on n'en génère qu'une.

D'une manière classique, on utilise une horloge fonctionnant à une fréquence assez élevée pour obtenir une bonne précision dans la mesure ainsi qu'un détecteur de seuil pour mesurer le temps de propagation de l'impulsion thermique.

Il est également possible d'utiliser la technique bien connue du sing-around.

Un autre exemple de réalisation de l'invention est représenté à la figure 5. Tout ce qui a été décrit précédemment pour le premier mode de réalisation notamment sur le principe de mesure du débit de fluide ne sera pas répété dans ce qui suit, seuls les nouvelles caractéristiques de l'invention et leurs avantages seront présentés ci-après.

Ainsi que représenté à la figure 5, l'obstacle 112 de forme aérodynamique possède une partie en aval effilée qui forme au moins un canal convergent 146 avec les parois latérales de la canalisation 110.

Sur la partie en aval d'un des flancs de l'enceinte 112, un élément chauffant 116 est monté à fleur de la paroi extérieure de ladite enceinte 112.

Cette caractéristique permet avantageusement de protéger l'élément chauffant contre d'éventuelles pollutions.

Le premier capteur thermique 142 est situé en amont de l'élément chauffant 116, hors de l'enceinte 112 et sans contact avec celle-ci alors que le second capteur thermique 144 est placé dans ladite enceinte. Le premier capteur thermique 142 peut également être situé en aval de l'élément chauffant 116.

Pour ne pas perturber les mesures de débits, l'ouverture 114 permettant les échanges de fluide entre l'intérieur et l'extérieur de l'enceinte 112 est pratiquée dans le flanc de l'enceinte qui est opposé au flanc portant l'élément chauffant 116 et dans la partie en aval de ladite enceinte 112. Le fait que la partie en aval de l'obstacle forme au moins un convergent avec une paroi de la canalisation a pour effet de conserver un profil de vitesse laminaire ce qui permet d'obtenir de bonnes mesures sur une large gamme de débits.

## Revendications

1. Débitmètre volumique à mesure de temps de vol apte à être placé dans une canalisation (10, 110) dans laquelle circule un fluide, caractérisé en ce qu'il comprend:
- une enceinte (12, 112) munie d'une ouverture (14, 114) apte à permettre des échanges de fluide entre l'intérieur et l'extérieur de l'enceinte (12, 112), le fluide étant sensiblement au repos dans l'enceinte (12, 112),
- un élément chauffant (16, 116) unique monté à fleur de paroi de l'enceinte (12, 112) et apte à émettre des impulsions de chaleur simultanément à l'intérieur et à l'extérieur de l'enceinte (12, 112),
- un premier capteur thermique (42, 142) placé hors de l'enceinte (12, 112) et sans contact avec l'enceinte (12, 112) à proximité de l'élément chauffant (16, 116),
- un second capteur thermique (44, 144) placé dans l'enceinte (12, 112) et sans contact avec l'enceinte (12, 112) à proximité de l'élément chauffant (16, 116),
- des moyens de mesure (48, 50) d'un premier déphasage ou d'un premier temps de propagation entre l'émission des impulsions de chaleur et leur détection par le premier capteur thermique (42, 142) et d'un second déphasage ou d'un second temps de propagation entre l'émission des impulsions de chaleur et leur détection par le second capteur thermique (44, 144),
- et des moyens (52) pour déduire un débit volumique compensé en température et pression et indépendant de la composition du fluide à partir des premier et second déphasages ou des premier et second temps de propagation.

2. Débitmètre volumique selon la revendication 1, caractérisé en ce que l'élément chauffant (16, 116) est constitué par une résistance chauffante (20) disposée sur une face d'une membrane (18) apte à favoriser une conduction de la chaleur selon l'épaisseur de la membrane au détriment d'une conduction latérale de la chaleur.

3. Débitmètre volumique selon la revendication 2, caractérisé en ce que l'élément chauffant comprend:
- un support (15) percé d'un orifice (17),
- une couche (19) isolante électriquement, solidaire du support (15) et formant membrane (18) au niveau de l'orifice (17),
- une résistance chauffante (20) constituée par un dépôt conducteur réalisé sur la membrane (18),
- des pistes (22, 24) conductrices terminées par des plots de contact (26, 28) et connectées aux extrémités de la résistance chauffante.

4. Débitmètre volumique selon la revendication 3, caractérisé en ce que la couche (19) est en polymère.

5. Débitmètre volumique selon la revendication 3, caractérisé en ce que la couche (19) est en nitrure de silicium.

6. Débitmètre volumique selon la revendication 1, caractérisé en ce qu'il comporte au moins un capteur de température assujetti à l'élément chauffant (16, 116).

7. Débitmètre volumique selon la revendication 1, caractérisé en ce que au moins une partie de l'enceinte (12, 112) forme au moins un canal convergent (46, 146) avec une paroi de la canalisation (10, 110) et en ce que le premier capteur thermique (42, 142) est placé dans ce canal.

8. Débitmètre volumique selon la revendication 7, caractérisé en ce que l'enceinte (12, 112) constitue un obstacle aérodynamique pour la circulation du fluide.

9. Débitmètre volumique selon la revendication 8, caractérisé en ce que l'enceinte (12, 112) est placée dans un plan médian (P) de la canalisation (10, 110).

10. Débitmètre volumique selon la revendication 8, caractérisé en ce que l'enceinte (12, 112) possède une partie en amont sensiblement elliptique et une partie en aval effilée.

11. Débitmètre volumique selon la revendication 10, caractérisé en ce que la partie amont forme au moins un canal convergent (46) avec la paroi de la canalisation (10).

12. Débitmètre volumique selon la revendication 10, caractérisé en ce que la partie aval forme au moins un canal convergent (146) avec la paroi de la canalisation (110).

13. Débitmètre volumique selon la revendication 11 ou 12, caractérisé en ce que l'élément chauffant (16, 116) est placé sur le flanc de l'enceinte (12, 112) qui forme au moins un canal convergent (46, 146) avec la paroi de la canalisation (10, 110).

14. Débitmètre volumique selon la revendication 10, caractérisé en ce que l'ouverture (14, 114) est placée dans la partie en aval.

15. Débitmètre volumique selon la revendication 1, caractérisé en ce que le premier capteur thermique (42, 142) est placé en amont de l'élément chauffant (16, 116).
